# EUROPÄISCHE PATENTSCHRIFT

(11) **EP 1 921 355 B1**
(45) Veröffentlichungstag und Bekanntmachung des Hinweises auf die Patenterteilung: **27.02.2013**
(21) Anmeldenummer: 06025283.0
(22) Anmeldetag: 07.12.2006
(51) Int. Cl.: F16J 15/32

(54) **Radialwellendichtring**
Lip seal
Joint à lèvre

(30) Priorität: 07.11.2006 DE 102006052348
(43) Veröffentlichungstag der Anmeldung: 14.05.2008
(73) Patentinhaber: Carl Freudenberg KG, 69469 Weinheim (DE)
(72) Erfinder: Hintenlang, Günter, 69518 Absteinach (DE); Heldmann, Martin, 64678 Lindenfels (DE); Kohl, Christian, 69493 Hirschberg (DE); Grafmüller, Martin, 69488 Birkenau (DE)

(56) Entgegenhaltungen:
- DE-A- 4 317 489
- DE-A- 19 705 428
- DE-C- 4 205 862
- DE-U- 7 304 680

## Beschreibung

### Technisches Gebiet

Die Erfindung betrifft einen Radialwellendichtring mit einem aus elastomeren Material bestehenden Dichtkörper und einem die Dichtlippe haltenden Stützkörper.

Radialwellendichtringe der genannten Art kommen vielseitig zum Einsatz (siehe z.B. DE.U. 7 304 680). Ein immer wieder auftretendes Problem bei Dichtringen dieser Art ist, dass sie bei der Montage der Welle beschädigt werden können. Die Dichtlippen werden insbesondere bei manueller Handmontage durch die Vielverzahnung der Welle beschädigt. Es sind deshalb Montagehilfen bekannt geworden, die während der Montage des Dichtrings eingesetzt werden. Zum Teil werden diese Hilfen auch als Transportschutz benutzt. Dabei werden Sie für die Dauer des Transports und auch während der Montage mit dem Dichtring vereinigt.

### Stand der Technik

Durch die DE 2 340 275 A ist ein Transportschutz- und Montagering für Wellendichtringe bekannt geworden. Der Montagering hat einen hülsenförmigen, zum Aufschieben auf die Welle bestimmten und auf seinem Außenumfang die Dichtlippe aufnehmenden Teil und einen zur Begrenzung der axialen Einschiebbewegung dienenden Radialflansch.

Eine andere Möglichkeit zeigt die DE 103 25 254 A1. Hier wird als Schutzring ein Protektorring mit einer äußeren Stützfläche für die Dichtlippe und einer als Griff ausgebildeten Haltevorrichtung verwendet. Durch einen scheibenförmigen Deckel verschließt der Protektorring die Öffnung des Montageschutzrings, so dass Schmutz- oder Lackierstaub nicht in das Gehäuseinnere eindringen kann, und außerdem Schmier- oder Konservierungsmittel in das Gehäuse bereits vor dem Transport eingefüllt werden können. Nach dem Montagevorgang wird der Montageschutzring vom Dichtring entfernt.

Die bekannten Lösungen sind doch nicht immer einsetzbar, insbesondere dann nicht, wenn kein ausreichender Platz vorhanden ist, um die Axialbewegungen der Schutzhülsen durchführen zu können.

### Darstellung der Erfindung

Der Erfindung liegt die Aufgabe zugrunde, die beim Stand der Technik vorhandenen Nachteile zu vermeiden und eine Lösung zu finden, bei der auch bei Wellen mit einer Vielverzahnung und sehr engen Platzverhältnissen eine sichere Montage, ohne Beschädigung der Dichtlippe, möglich ist.

Die Lösung der gestellten Aufgabe wird mit den Merkmalen des Anspruchs 1 erreicht. Die Unteransprüche 2 bis 6 stellen vorteilhafte Weiterbildungen des erfindungsgemäßen Gegenstandes dar.

Der Grundgedanke der vorliegenden Erfindung besteht darin, dass der zum Einsatz kommende Radialwellendichtring mit einer Ringeinlage aus Kunststoff versehen wird, die als Montagehilfe dient, die jedoch nach der Montage am Dichtring verbleibt. Die Ringeinlage ist so angeordnet, dass sie axial nach außen gerichtet, auf der Innenseite am Dichtkörper angeordnet ist, wobei der Innendurchmesser der Ringeinlage geringfügig größer als der Außendurchmesser der vom Dichtring umfassten Welle ist. Durch die Ringeinlage wird eine zentrische Ausrichtung des Dichtrings zur Welle erreicht, so dass die bei der Montage der Ringeinlage nachfolgende Dichtlippe ebenfalls zentrisch zur Welle ausgerichtet ist.

Der Radialwellendichtring kann beliebiger Bauart sein, wobei die Dichtlippe von einem Stützkörper gehalten wird. Dieser Stützkörper kann ebenfalls aus elastomerem Material sein, der bevorzugt mit einer Versteifung aus einem Blechring versehen ist. Der Dichtring kann außerdem mit einer oder auch mehreren Dichtlippen ausgestattet sein. Dabei kann die Dichtlippe von einer Ringwendelfeder an die Welle angedrückt werden.

Der Abstand der Ringeinlage von der Welle wird so gewählt, dass die Ringeinlage im vorgesehenen Normalbetrieb der Welle, mit der Welle nicht in Berührung kommt.

Eine sehr vorteilhafte Ausbildung des Radialwellendichtrings kann dadurch erreicht werden, dass der Dichtring an seiner axial nach außen weisenden Wandung mit einer vorstehenden Wulst versehen ist, an deren Innenwand die Ringeinlage angebracht ist. Die Wulst ist dabei Bestandteil des Stützkörpers und aus elastomerem Material. Möglich ist aber auch die Wulst als Bestandteil des Dichtkörpers auszubilden.

Die Verbindung der Ringeinlage mit dem Dichtring bzw. mit der Wulst erfolgt bevorzugt formschlüssig. Hierfür sind der Dichtring bzw. die Wulst mit mindestens einer nutartigen Vertiefung versehen, in die eine an der Außenwand Ringeinlage angebrachte Auswölbung eingreift. In weiterer Ausgestaltung, des mit einer Wulst versehenen Dichtrings, wird die dafür vorgesehene Ringeinlage mit einem Ringflansch versehen, der am Dichtring bzw. an der Wulst zur Anlage kommt. Hierdurch wird der Einschubweg der Ringeinlage in den Dichtring begrenzt. Darüber hinaus kann der Ringflansch in seiner radialen Abmessung so ausgestattet sein, dass er über die Wulst hervorsteht. Hierdurch wird zusätzlich zu der Eigenschaft als Montagehilfe der Dichtring mit einer Ablaufrinne für Schmutzwasser versehen.

### Kurzbeschreibung der Zeichnung

- Fig. 1: Im Schnitt den oberen Teil eines Radialwellendichtrings ohne Schmutzlippe mit einer Ringeinlage und
   - Fig. 2: den Radialwellendichtring im Schnitt mit einer Ringeinlage mit einem Ringflansch.

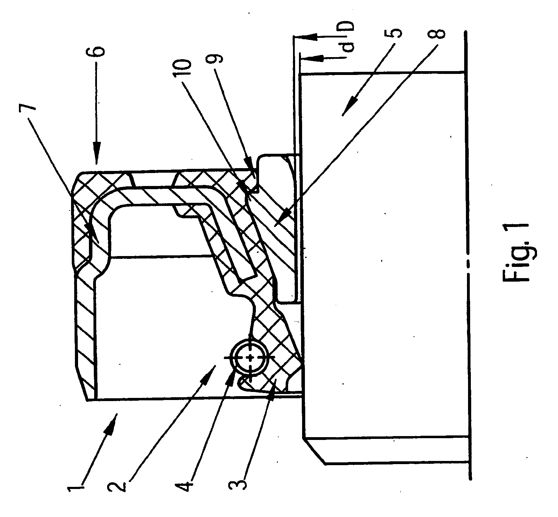

Der in der Figur 1 gezeigte Radialwellendichtring besteht aus dem Dichtkörper 2 mit der Dichtlippe 3, die durch die Ringwendelfeder 4 an die Welle 5 gedrückt wird. Die Dichtlippe 3 ist an dem Stützkörper 6 gehalten. Dichtlippe 3 und Stützkörper 6 sind beide aus dem gleichen elastomeren Material hergestellt. In den Stützkörper 6 eingebettet bzw. damit verbunden ist der aus Metall bestehende Versteifungsring 7. Der Dichtring 1 ist mit der Ringeinlage 8 versehen, die aus Kunststoff besteht. Dabei ist die Ringeinlage 8 auf der Innenseite 9 des Stützkörpers 6 angeordnet und hat einen Innendurchmesser D, der größer ist als der Außendurchmesser d der vom Dichtring 1 umfassten Welle 5. Der durch die Radien R der Ringeinlage 8 und r der Welle 5 gebildete Abstand A zwischen der Ringeinlage 8 und der Welle 5, wird so gewählt, dass er etwas größer als der Maximalausschlag der Welle 5 bzw. der Dichtlippe 3 im Betrieb ist, so dass kein Kontakt der Ringeinlage mit der Welle stattfindet.

Auf der Radial innenliegenden Seite ist der Stützkörper 6 mit der Vertiefung 10 versehen, in die ein entsprechend ausgebildetes Ringgegenlager der Ringeinlage 8 eingreift. Dadurch wird die Ringeinlage 8 formschlüssig mit dem Dichtring 1 bzw. Stützkörper 6 verbunden.

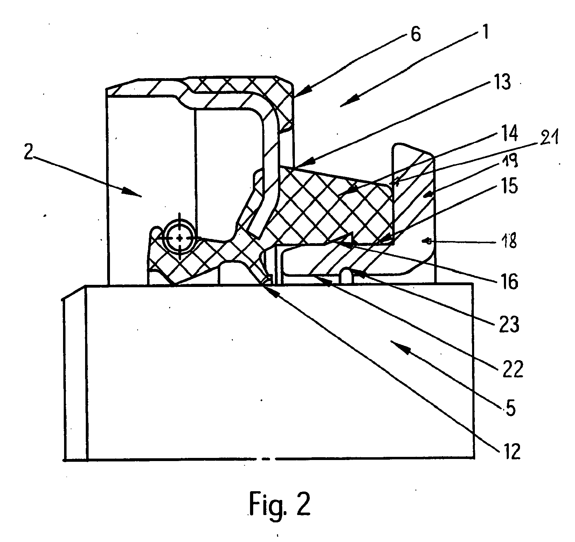

In der Figur 2 ist die bevorzugte Ausführungsform des Dichtrings 1 dargestellt. Dichtkörper 2 und Stützkörper 6 haben in etwa den gleichen Aufbau wie in Figur 1 gezeigt. Der Dichtkörper 2 ist hier jedoch zusätzlich mit einer Schmutzlippe 12 versehen und der Stützkörper 6 hat an seiner radial nach außenweisenden Wandung 13 die vorstehende Wulst 14. An der radialen Innenwand 15 der Wulst 14 ist die Ringeinlage 18 befestigt. Die Wulst 14 ist dabei als Bestandteil des Stützkörpers 6 ausgebildet. Auf ihrer Innenseite hat die Wulst 14 die nutförmige umlaufende Vertiefung 16, in die ein entsprechend ausgebildeter ringförmiger Noppen der Ringeinlage 18 eingreift. Die Ringeinlage 18 ist mit dem Ringflansch 19 versehen, der radial über die Wulst 14 hervorsteht. Hierdurch ergibt sich die Ablaufrinne 21 für Schmutzwasser. Außerdem begrenzt der Ringflansch 19 den Einschubweg der Ringeinlage 18.

Auf ihrer Innenwand 22 hat die Ringeinlage 18 die Ringnut 23. Diese Ringnut kann bei Bedarf auch bei der Ausführungsform nach Figur 1 eingesetzt werden.

## Patentansprüche

1. Radialwellendichtring (1) mit einem aus elastomerem Material bestehenden in eine Gehäusebohrung einpressbaren Dichtkörper (2) mit wenigstens einer Dichtlippe (3) und einem den Dichtkörper (2) haltenden Stützkörper (6), wobei der Dichtring (1) mit einer Ringeinlage (18) aus einem Kunststoff versehen ist, die auf der zur Welle (5) gerichteten Innenseite (22) des Stützkörpers (6) angeordnet und formschlüssig mit dem Dichtring (1) verbunden ist und nach der Montage am Dichtring (1) verbleibt, wobei der Innendurchmesser (D) der Ringeinlage (18) größer als der Außendurchmesser (d) der vom Dichtring (1) umfassen Welle (5) ist, **dadurch gekennzeichnet, dass** der Dichtring (1) an seiner axial nach außen weisenden Wandung (13) mit einer vorstehenden einen Bestandteil des Stützkörpers (6) bildenden Wulst (14) versehen ist, an deren Innenwand (15) die Ringeinlage (18) formschlüssig über eine umlaufende Vertiefung (16) und einen ringförmig ausgebildeten Noppen angebracht ist, wobei der Abstand (A) der Ringeinlage (18) von der Welle (5) größer als der maximale Ausschlag der Dichtlippe (3) im Betrieb ist und im Betrieb kein Kontakt der Ringeinlage (18) mit der Welle (5) stattfindet.

2. Radialwellendichtring nach Anspruch 1, **dadurch gekennzeichnet, dass** die Ringeinlage (18) einen an der Wulst (14) anliegenden Ringflansch (19) hat.

3. Radialwellendichtring nach Anspruch 2, **dadurch gekennzeichnet, dass** der Ringflansch (19) radial über die Wulst (14) hervorsteht.

4. Radialwellendichtring nach einem der Ansprüche 1 bis 3, **dadurch gekennzeichnet, dass** die Dichtlippe (3) von einer Ringwendelfeder (4) an die Welle (5) angedrückt ist.

5. Radialwellendichtring nach einem der Ansprüche 1 bis 4, **dadurch gekennzeichnet, dass** der Stützkörper (6) eine metallische Versteifung (7) hat.

6. Radialweliendichtring nach einem der Ansprüche 1 bis 5, **dadurch gekennzeichnet, dass** die Ringeinlage (18) auf ihrer Innenwand (22) wenigstens eine Ringnut (23) hat.

## Claims

1. Radial shaft sealing ring (1) having a sealing body (2) which consists of elastomeric material and is pressable into a housing bore; said sealing body (2) having at least one sealing lip (3) and a supporting body (6) that holds the sealing body (2), wherein the sealing ring (1) is provided with an annular insert (18) made of a plastics material, said annular insert (18) being arranged on an inner side (22), directed towards the shaft (5), of the supporting body (6), being connected in a form-fitting manner to the sealing ring (1) and remaining on the sealing ring (1) after mounting, wherein the inside diameter (D) of the annular insert (18) is greater than the outside diameter (d) of the shaft (5) enclosed by the sealing ring (1), **characterized in that** the sealing ring (1) is provided on its axially outwardly directed wall (13) with a protruding bead (14) that forms a constituent part of the supporting body (6) and to the inner wall (15) of which the annular insert (18) is attached in a form-fitting manner via a peripheral depression (16) and an annularly formed boss, wherein the distance (A) of the annular insert (18) from the shaft (5) is greater than the maximum deflection of the sealing lip (3) in operation, and in operation no contact takes place between the annular insert (18) and the shaft (5).

2. Radial shaft sealing ring according to Claim 1, **characterized in that** the annular insert (18) has an annular flange (19) that bears on the bead (14).

3. Radial shaft sealing ring according to Claim 2, **characterized in that** the annular flange (19) protrudes radially beyond the bead (14).

4. Radial shaft sealing ring according to one of Claims 1 to 3, **characterized in that** the sealing lip (3) is pressed against the shaft (5) by an annular coil spring (4).

5. Radial shaft sealing ring according to one of Claims 1 to 4, **characterized in that** the supporting body (6) has a metal reinforcement (7).

6. Radial shaft sealing ring according to one of Claims 1 to 5, **characterized in that** the annular insert (18) has at least one annular groove (23) on its inner wall (22).

## Revendications

1. Joint à lèvre radial (1) comprenant un corps d'étanchéité (2) constitué d'un matériau élastomère et pouvant être pressé dans un alésage de boîtier, comprenant au moins une lèvre d'étanchéité (3) et un corps de support (6) retenant le corps d'étanchéité (2), le joint d'étanchéité (1) étant pourvu d'un insert annulaire (18) en plastique, qui est disposé du côté intérieur (22) du corps de support (6) tourné vers l'arbre (5) et qui est connecté par engagement par correspondance géométrique au joint d'étanchéité (1) et qui reste sur le joint d'étanchéité (1) après le montage, le diamètre intérieur (D) de l'insert annulaire (18) étant supérieur au diamètre extérieur (d) de l'arbre (5) entouré par le joint d'étanchéité (1), **caractérisé en ce que** le joint d'étanchéité (1) est muni sur sa paroi (13) tournée axialement vers l'extérieur d'un bourrelet (14) saillant formant un constituant du corps de support (6), sur la paroi intérieure (15) duquel l'insert annulaire (18) est monté par engagement par correspondance géométrique par le biais d'un renfoncement périphérique (16) et d'une protubérance réalisée sous forme annulaire, la distance (A) de l'insert annulaire (18) à l'arbre (5) étant supérieure au débattement maximal de la lèvre d'étanchéité (3) pendant le fonctionnement, et aucun contact n'ayant lieu entre l'insert annulaire (18) et l'arbre (5) pendant le fonctionnement.

2. Joint à lèvre radial selon la revendication 1, **caractérisé en ce que** l'insert annulaire (18) présente une bride annulaire (19) s'appliquant contre le bourrelet (14).

3. Joint à lèvre radial selon la revendication 2, **caractérisé en ce que** la bride annulaire (19) fait saillie radialement au-delà du bourrelet (14).

4. Joint à lèvre radial selon l'une quelconque des revendications 1 à 3, **caractérisé en ce que** la lèvre d'étanchéité (3) est pressée par un ressort hélicoïdal annulaire (4) contre l'arbre (5).

5. Joint à lèvre radial selon l'une quelconque des revendications 1 à 4, **caractérisé en ce que** le corps de support (6) présente un renforcement métallique (7).

6. Joint à lèvre radial selon l'une quelconque des revendications 1 à 5, **caractérisé en ce que** l'insert annulaire (18) présente sur sa paroi intérieure (22) au moins une rainure annulaire (23).
